# EUROPEAN PATENT APPLICATION

(11) **EP 3 508 092 A1**
(43) Date of publication of application: **10.07.2019**
(21) Application number: 18150153.7
(22) Date of filing: 03.01.2018
(51) Int. Cl.: A47B 9/00

(54) **TABLETOP ELEVATION ADJUSTMENT MECHANISM**

(71) Applicant: Ko, Wen-Shan, 505 Changhua County (TW)
(72) Inventor: Ko, Wen-Shan, 505 Changhua County (TW)
(74) Representative: Becker Kurig Straus

(57) **Abstract**

A tabletop elevation adjustment mechanism (10) includes a fixed outer tube (20), a movable inner tube (30) vertically movable in the fixed outer tube (20), and a plurality of corrugated sheet members (40) equiangularly fastened to a bottom (31) of the movable inner tube (30). Each of the corrugated sheet members (40) has a plurality of first and second ridge portions (41,42) respectively protruding toward two opposite sides thereof. The first ridge portions (41) elastically stopped against an outer surface of the movable inner tube (30) and the second ridge portions (42) elastically stopped against an inner surface of the fixed outer tube (20).

## Description

### BACKGROUND OF THE INVENTION

### 1. Field of the Invention

The present invention relates to height-adjustable table technology, and more particularly to a tabletop elevation adjustment mechanism, which can solve the problem of gap caused by size tolerance.

### 2. Description of the Related Art

In order to meet the needs of different users on the desktop height, commonly used reading tables, computer tables or office desks, are normally equipped with an elevation adjustment mechanism for allowing users to adjust the desktop height as desired. Referring to conventional tabletop elevation adjustment mechanism, it generally comprises a fixed outer tube and a movable inner tube movably inserted in the fixed outer tube movable. By means of adjusting the elevation of the movable inner tube relative to the fixed outer tube, the tabletop elevation is thus adjusted.

In order to reduce friction between the fixed outer tube and the movable inner tube, a bushing is employed to sleeve onto a top opening of the fixed outer tube to accommodate the movable inner tube, smoothening the vertical moving of the movable inner tube relative to the fixed outer tube and avoiding generation of noises. However, the size of the bushing is predetermined. If the movable inner tube has a significant size tolerance, the bushing will be unable to fit the movable inner tube, causing the movable inner tube unable to be used. Further, owing that the bushing is installed on the top opening of the fixed outer tube, the movable inner tube will be rubbed against the bushing, causing axial scratch on the surface of the movable inner tube after long term uses. Thus, this related art design still has room for improvement.

### SUMMARY OF THE INVENTION

The present invention has been accomplished under the circumstances in view. It is the main object of the present to provide a tabletop elevation adjustment mechanism, which can solve the problem of gap caused by size tolerance, and can reduce friction wear during the operation.

To achieve this and other objects of the present invention, a tabletop elevation adjustment mechanism of the present invention is provided, which comprises a fixed outer tube, a movable inner tube, and a plurality of corrugated sheet members. The movable inner tube has a bottom and an axis. The movable inner tube is movably inserted in the fixed outer tube, having a top end thereof disposed outside the fixed outer tube and an opposing bottom end thereof disposed inside the fixed outer tube. The corrugated sheet members are fastened to the bottom of the movable inner tube and equiangularly arranged around the axis of the movable inner tube. Each of the corrugated sheet members comprises a plurality of first ridge portions and second ridge portions respectively protruding toward two opposite sides thereof. The first ridge portions are elastically stopped against an outer surface of the movable inner tube. The second ridge portions are elastically stopped against an inner surface of the fixed outer tube.

Thus, the tabletop elevation adjustment mechanism of the present invention can use the corrugated sheet members to fill up the gap between the fixed outer tube and the movable inner tube. Even there exists a size tolerance between the fixed outer tube and the movable inner tube, the corrugated sheet members can be properly and elastically deformed to compensate the size tolerance. Further, since the corrugated sheet members are mounted on the outer surface of the movable inner tube, the surface friction wear caused on the movable inner tube can be reduced by the corrugated sheet members as the movable inner tube vertically moves.

Preferably, the movable inner tube comprises a plurality of upper elongated holes and a plurality of lower elongated holes disposed at the bottom of the movable inner tube. The upper elongated holes each have a longitudinal axis parallel to the axis of the movable inner tube. The lower elongated holes each have a longitudinal axis perpendicular to the axis of the movable inner tube. Further, each of the corrugated sheet members comprise an upper locating rod a lower locating rod respectively inserted into one of the upper elongated holes and one respective lower elongated hole of the movable inner tube. The mating design of the upper and lower elongated holes of the movable inner tube and the upper and lower locating rods of the corrugated sheet members can facilitate quick installation of the corrugated sheet members.

Preferably, the corrugated sheet members each have a rectangular shape and have a center opening cut through the two opposite sides thereof. The center opening has a long side parallel to the axis of the movable inner tube. Thus, the corrugated sheet members can be easily and elastically deformed when it receives an external force.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is an oblique top elevational view of a tabletop elevation adjustment mechanism in accordance with the present invention.

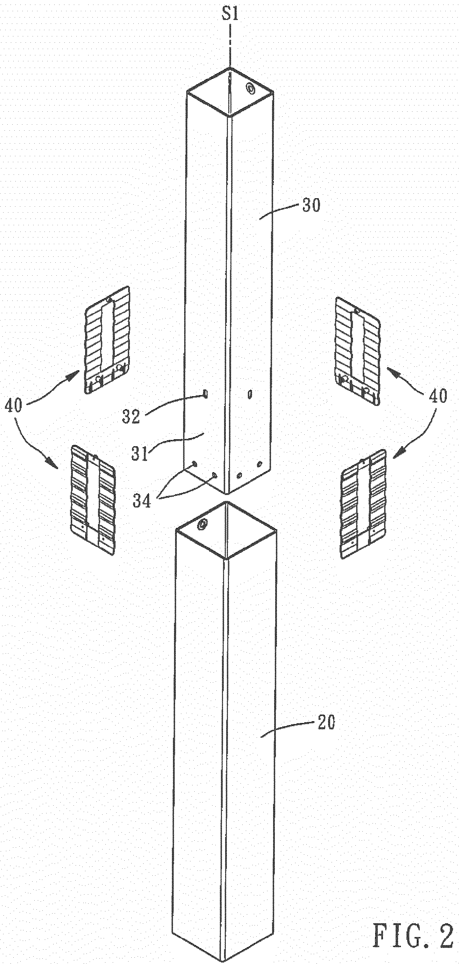

FIG. 2 is an exploded view of the tabletop elevation adjustment mechanism in accordance with the present invention.
FIG. 3 is an elevational view of a corrugated sheet member for tabletop elevation adjustment mechanism in accordance with the present invention.
FIG. 4 is a longitudinal sectional view of the tabletop elevation adjustment mechanism in accordance with the present invention.

### DETAILED DESCRIPTION OF THE INVENTION

The invention will now be described by way of examples with reference to the annexed drawings. In the specification, the terms "up", "down", "inside", "outside", "top", "bottom" and so on are merely descriptive terms based on the normal use direction but not intended to limit the scope of the invention.

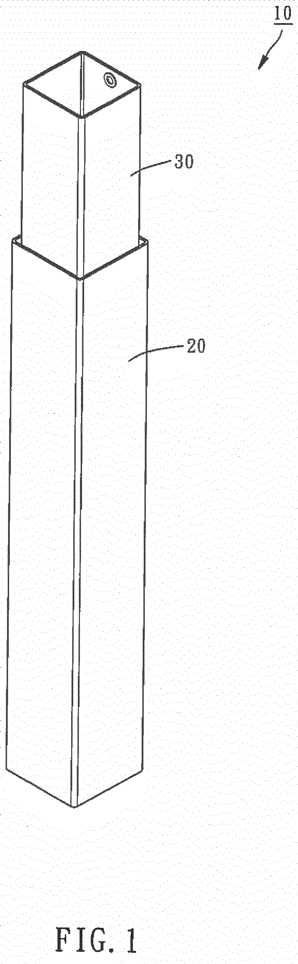

Referring to FIG. 1, a tabletop elevation adjustment mechanism **10** of the present invention comprises a fixed outer tube **20,** a movable inner tube **30,** and four corrugated sheet members **40.**

The fixed outer tube **20** in this embodiment has a rectangular cross section.

The movable inner tube **30** in this embodiment has a rectangular cross section. The movable inner tube **30** has a bottom **31** and an axis **S1.** The movable inner tube **30** is vertically and movably inserted in the fixed outer tube **20.** The movable inner tube **30** has a top end thereof disposed outside the fixed outer tube **20** and an opposing bottom end disposed inside the fixed outer tube **20.** Further, the movable inner tube **30** has an upper elongated hole **32** and two juxtaposed lower elongated holes **34** located on each of four sides thereof at the bottom **31** of the movable inner tube 30. The two lower elongated holes **34** are arranged in parallel. The upper elongated hole **32** has a longitudinal axis **S2** parallel to the axis **S1** of the movable inner tube **30.** The lower elongated holes each **34** have a longitudinal axis **S3** perpendicular to the axis **S1** of the movable inner tube **30.**

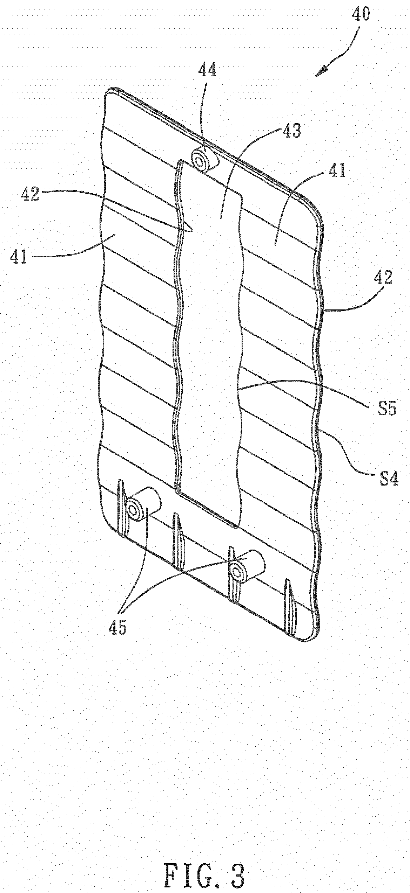

The corrugated sheet members **40** are flexible rectangular plastic sheets with a long side **S4** parallel to the axis **S1** of the movable inner tube **30.** As illustrated in FIG 3, each of the corrugated sheet members **40** comprise a plurality of first ridge portions **41** and second ridge portions **42** protruding toward two opposite sides thereof and alternatively arranged in two rows along the axis **S1** of the movable inner tube **30,** i.e., each of the first ridge portions **41** is connected between two of the adjacent second ridge portions **42.** Further, the corrugated sheet members **40** has a center opening **43** cut through the two opposite sides with a long side **S5** parallel to the axis **S1** of the movable inner tube **30.** The center opening **43** enables the corrugated sheet member **40** to be easily elastically deformed when it is compressed or stretched, and facilitates equal and stable distribution of the applied force in all directions.

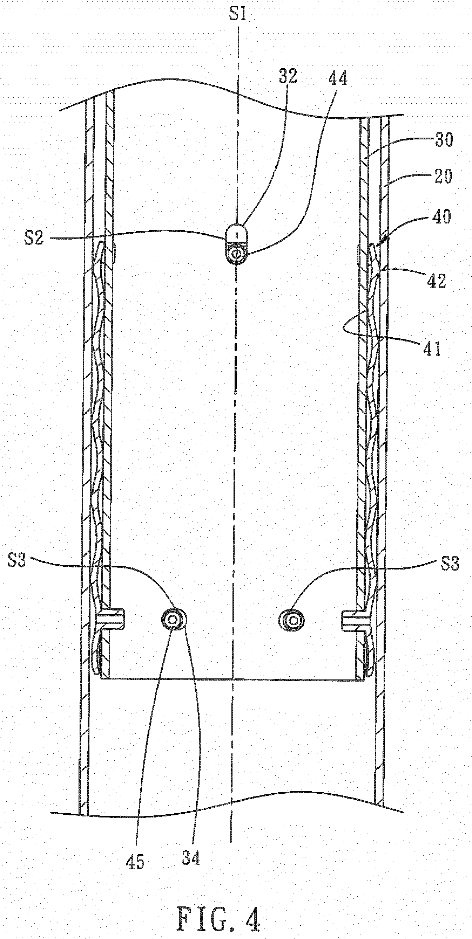

Referring to FIG, 2 and FIG. 4, the four corrugated sheet members **40** are respectively attached onto four lateral surfaces of the movable inner tube **30.** The four corrugated sheet members **40** each further comprises an upper locating rod **44** and two juxtaposed lower locating rods **45** . In installation, the upper locating rod **44** and lower locating rods **45** of the four corrugated sheet members **40** are respectively inserted into the upper elongated holes **32** and lower elongated holes **34** at each of the four lateral surfaces of the movable inner tube **30.** The design of the upper and lower elongated holes **32,34** allows the user to install different size of the corrugated sheet members **40** (i.e. the corrugated sheet members **40** with higher or lower ridge height) at the same locating place (i.e. the location of the upper elongated holes **32** and lower elongated holes **34)** facilitating installation flexibility, installation convenience and installation applicability. After installation, the four corrugated sheet members **40** are equiangularly arranged around the axis of the movable inner tube **30** with the first ridge portions **41** thereof elastically stopped against the four lateral surfaces of the movable inner tube **30** and the second ridge portions **42** thereof stopped against the inner surface of the fixed outer tube **20.**

Thus, the tabletop elevation adjustment mechanism **10** of the present invention uses the corrugated sheet members **40** to fill up the gap between the fixed outer tube **20** and the movable inner tube **30.** As the first and second ridge portions **41,42** of the corrugated sheet members **40** are respectively stopped against the movable inner tube **30** and the fixed outer tube **20,** the corrugated sheet members **40** can be properly elastically deformed to compensate a size tolerance of the movable inner tube **30,** saving the cost. Further, since the corrugated sheet members **40** are mounted on the four lateral surfaces of the movable inner tube **30** and the corrugated sheet members **40** can be moved up and down with the movable inner tube **30,** the corrugated sheet members **40** reduces the friction wear of the movable inner tube **30** as the movable inner tube **30** is being moved upward or downward, also facilitating operation with less effort.

## Claims

1. A tabletop elevation adjustment mechanism (10), comprising:
a fixed outer tube (20);
a movable inner tube (30) having a bottom (31) and an axis (SI), said movable inner tube (30) being movably inserted in said fixed outer tube (20), said movable inner tube (30) having a top end thereof disposed outside said fixed outer tube (20) and an bottom end thereof disposed inside said fixed outer tube (20); and
a plurality of corrugated sheet members (40) being fastened to said bottom (31) of said movable inner tube (30) and equiangularly arranged around said axis (S1) of said movable inner tube (30), each of said corrugated sheet members (40) comprising a plurality of first ridge portions (41) and a plurality of second ridge portions (42) respectively protruding toward two opposite sides thereof, said plurality of said first ridge portions (41) being elastically stopped against an outer surface of said movable inner tube (30), said plurality of said second ridge portions (42) being elastically stopped against an inner surface of said fixed outer tube (20).

2. The tabletop elevation adjustment mechanism (10) as claimed in claim 1, wherein said movable inner tube (30) comprises a plurality of upper elongated holes (32) and a plurality of lower elongated holes (34) disposed at said bottom (31) of said movable inner tube (30); said upper elongated holes (32) has a longitudinal axis (S2) parallel to the axis (S1) of said movable inner tube (30); said lower elongated holes (34) has a longitudinal axis (S3) perpendicular to said axis (S1) of said movable inner tube (30); each of said corrugated sheet members (40) comprises an upper locating rod (44) and a lower locating rod (45) respectively inserted into one of said upper elongated holes (32) of said movable inner tube (30) and one of respective said lower elongated holes (34) of said movable inner tube (30).

3. The tabletop elevation adjustment mechanism (10) as claimed in claim 1, wherein said corrugated sheet members (40) each have a rectangular shape; each of said corrugated sheet members (40) further comprises a center opening (43) cutting through the two opposite sides thereof; said center opening (43) has a long side (S5) parallel to said axis (S1) of said movable inner tube (30).

4. The tabletop elevation adjustment mechanism (10) as claimed in claim 1, wherein said corrugated sheet members (40) each have a rectangular shape; each of said corrugated sheet members (40) has a long side (S4) parallel to said axis (S1) of said movable inner tube (30); said first ridge portions (41) and said second ridge portions (42) of said corrugated sheet members (40) are alternatively arranged in rows along said axis (S1) of said movable inner tube (30).
